# EUROPÄISCHE PATENTSCHRIFT

(11) **EP 1 754 895 B1**
(45) Veröffentlichungstag und Bekanntmachung des Hinweises auf die Patenterteilung: **20.08.2008**
(21) Anmeldenummer: 06016087.6
(22) Anmeldetag: 02.08.2006
(51) Int. Cl.: F16B 5/00, F16B 5/06

(54) **Speisentransportbehälter**
Food transport container
Récipient pour transport d'aliments

(30) Priorität: 18.08.2005 DE 102005039006
(43) Veröffentlichungstag der Anmeldung: 21.02.2007
(73) Patentinhaber: BLANCO CS GmbH + Co KG, 75038 Oberderdingen (DE)
(72) Erfinder: Kübler, Dietmar, 75038 Oberderdingen (DE); Böss, Ralf, 76703 Kraichtal-Oberöwisheim (DE); Heidelberger, Helmut, 75015 Bretten-Neibsheim (DE)
(74) Vertreter: Hoeger, Stellrecht & Partner Patentanwälte

(56) Entgegenhaltungen:
- CH-A- 402 626
- DE-U1- 29 809 629
- GB-A- 605 028
- GB-A- 2 287 517

## Beschreibung

Die vorliegende Erfindung betrifft einen Speisentransportbehälter mit einem Außenkorpus, der mindestens ein Bauteil mit einem abgekanteten Bereich umfasst, und mit einem Innenkorpus, der mindestens ein Bauteil mit einem abgekanteten Bereich umfasst.

Aus dem Stand der Technik ist es bekannt, solche Bauteile, insbesondere Blechteile mit abgekanteten Bereichen, mittels Schweißen, Punktschweißen, Schrauben, Nieten, Kleben oder ähnlichen Fügetechniken miteinander zu verbinden.

Insbesondere sind Speisentransportbehälter bekannt, deren Gehäuse einen Außenkorpus und einen Innenkorpus, beispielsweise für ein Wärmefach, umfasst, wobei der Außenkorpus und der Innenkorpus miteinander verbunden werden, indem der Außenkorpus umlaufend mit dem Innenkorpus verschweißt wird.

Dieser Schweißvorgang verlangt jedoch umfangreiche Vorbereitungen und mehrere zeitaufwendige Arbeitsgänge. Insbesondere müssen die miteinander zu verbindenden Bauteile vor dem Schweißvorgang präzise relativ zueinander positioniert werden. Der Schweißvorgang selbst ist sehr zeitaufwendig. Nach dem eigentlichen Schweißvorgang sind umständliche Schleifarbeiten zur Nachbearbeitung erforderlich.

Auch die weiteren, vorstehend erwähnten Verbindungstechniken sind zeitaufwendig und vorbereitungsintensiv.

So müssen beim Punktschweißen die miteinander zu verbindenden Bauteile durch speziell hierfür vorgesehene Vorrichtungen oder durch einen zusätzlichen Mitarbeiter relativ zueinander positioniert werden.

Bei einer Verbindung durch Schrauben oder Nieten müssen die miteinander zu verbindenden Bauteile durch Herstellen von Durchgangsöffnungen vorbereitet werden. Auch in diesem Fall ist die Montage durch die erforderliche genaue Positionierung oft umständlich und zeitaufwendig.

Alle bislang verwendeten Techniken sind somit relativ zeitaufwendig, setzen eine Vielzahl unterschiedlichster Arbeitsgänge voraus oder benötigen einen zweiten Mitarbeiter, um sie durchführen zu können.

Die DE 298 09 629 U1 offenbart ein Verbindungsprofilelement zum Verbinden nebeneinander angeordneter Kunststoffplatten, um eine zusammengesetzte Außenwand eines Behälters, beispielsweise eines Komposters, zu bilden. Die miteinander zu verbindenden Platten sind mit jeweils einem abgekanteten Bereich versehen, und das Verbindungsprofilelement umfasst zwei Aufnahmen für jeweils einen abgekanteten Bereich einer der miteinander zu verbindenden Platten.

Die GB-A-2 287 517 offenbart ein Verbindungsprofilelement zum Verbinden nebeneinander angeordneter Paneele, um eine zusammengesetzte Außenwand eines Gehäuses für ein Kraftfahrzeug zu bilden.

Die CH 402 626 A offenbart ein Verbindungsprofilelement zum Verbinden nebeneinander angeordneter Wandteile, um eine zusammengesetzte Außenwand einer Lade, insbesondere einer Seitenlade für Lastwagen oder Anhänger, zu bilden.

Die GB 605 028 A offenbart ein Verbindungsprofilelement zum Verbinden nebeneinander angeordneter Paneele, um eine zusammengesetzte Außenwand eines Möbelstücks, Bootes oder Kanus, Gebäudes, Zugwaggons, Automobils, Industriefahrzeugs, Kremserwagens, Flugzeugs oder ähnlichem zu bilden.

Der vorliegenden Erfindung liegt die Aufgabe zugrunde, einen Speisentransportbehälter zu schaffen, dessen Außenkorpus und Innenkorpus einfach und rasch miteinander verbindbar sind.

Diese Aufgabe wird erfindungsgemäß durch einen Speisentransportbehälter nach Anspruch 1 gelöst.

Das Verbindungsprofilelement umfasst zwei an die abgekanteten Bereiche der miteinander zu verbindenden Bauteile angepasste Aufnahmen, so dass nach dem Einbringen der abgekanteten Bereiche der miteinander zu verbindenden Bauteile in diese Aufnahmen die beiden Bauteile durch Formschluss gegen eine Relativbewegung relativ zu dem Verbindungsprofilelement und somit gegen eine Relativbewegung relativ zueinander gesichert sind, und zwar zumindest in den quer, vorzugsweise senkrecht, zur Längsrichtung des Verbindungsprofilelements verlaufenden Richtungen.

Aufgrund des Formschlusses zwischen dem Verbindungsprofilelement einerseits und den beiden miteinander zu verbindenden Bauteilen andererseits ist es bei der Verbindungsmethode, welche das Verbindungsprofilelement verwendet, nicht erforderlich, die Bauteile und/oder das Verbindungsprofilelement durch zusätzliche Befestigungselemente oder durch Stoffschluss, beispielsweise durch Schweißen oder Löten, miteinander zu verbinden. Ferner müssen die miteinander zu verbindenden Bauteile nicht durch die Herstellung von Durchgangsöffnungen vorbereitet werden.

Ferner ist die nur durch Formschluss hergestellte Verbindung zwischen den beiden miteinander zu verbindenden Bauteilen nicht nur sicher und dauerhaft, sondern kann auch bei Bedarf leicht wieder gelöst werden.

Irgendwelche Nacharbeiten sind bei Verwendung des Verbindungsprofilelements nicht erforderlich.

Bei einer bevorzugten Ausgestaltung des Verbindungsprofilelements ist vorgesehen, dass sich die Aufnahmen für die abgekanteten Bereiche der miteinander zu verbindenden Bauteile in einer Längsrichtung des Verbindungsprofilelements erstrecken.

Ein besonders sicherer Halt der beiden miteinander zu verbindenden Bauteile an dem Verbindungsprofilelement wird erzielt, wenn mindestens eine der Aufnahmen für die abgekanteten Bereiche im Querschnitt gesehen mindestens einen bogenförmig gekrümmten Abschnitt aufweist.

Der bogenförmig gekrümmte Abschnitt erstreckt sich bei einer bevorzugten Ausgestaltung über einen Bogenwinkel von mindestens 45°, vorzugsweise von mindestens 60°.

Um das Verbindungsprofilelement besonders flexibel einsetzen zu können, ist vorzugsweise vorgesehen, dass die mindestens zwei Aufnahmen spiegelsymmetrisch zueinander angeordnet sind.

Um einen Wärmetransport zwischen den miteinander zu verbindenden Bauteilen zu erschweren oder ganz auszuschließen, ist es günstig, wenn das Verbindungsprofilelement zumindest teilweise aus einem thermisch isolierenden Material gebildet ist.

Auf diese Weise kann das eine der miteinander zu verbindenden Bauteile als Innenkorpus und das andere der miteinander zu verbindenden Bauteile als Außenkorpus des gegenüber der Umgebung erwärmten oder gekühlten Gehäusefaches des Speisentransportbehälters verwendet werden.

Das Verbindungsprofilelement lässt sich besonders kostengünstig herstellen, wenn das Verbindungsprofilelement zumindest teilweise aus einem Kunststoffmaterial gebildet ist.

Alternativ hierzu kann das Verbindungsprofilelement auch zumindest teilweise aus einem metallischen Material, beispielsweise aus Aluminium, gebildet sein.

Insbesondere kann das Verbindungsprofilelement als ein Aluminium-Strangguss-Profilelement ausgebildet sein.

Grundsätzlich kommen auch beliebige andere Materialien für die Herstellung des Verbindungsprofilelements in Betracht.

Bei einer besonders einfach herzustellenden Ausgestaltung des Verbindungsprofilelements ist vorgesehen, dass das Verbindungsprofilelement einstückig ausgebildet ist.

Alternativ hierzu kann aber auch vorgesehen sein, dass das Verbindungsprofilelement mindestens zwei relativ zueinander verschiebbare Teilprofilelemente umfasst. Auf diese Weise kann das Einbringen der abgekanteten Bereiche der miteinander zu verbindenden Bauteile und/oder das Lösen der Verbindung zwischen den beiden miteinander zu verbindenden Bauteilen erleichtert werden.

Wenn das Verbindungsprofilelement mindestens zwei relativ zueinander verschiebbare Teilprofilelemente umfasst, so kann vorgesehen sein, dass die mindestens zwei Teilprofilelemente durch eine Nut-Feder-Verbindung miteinander verbunden sind.

Ein besonders sicherer Halt der beiden Teilprofilelemente aneinander wird dabei erzielt, wenn die Feder des einen Teilprofilelements und/oder die Nut des anderen Teilprofilelements im wesentlichen schwalbenschwanzförmig ausgebildet sind.

Vorzugsweise ist mindestens eines der Bauteile des Außenkorpus beziehungsweise des Innenkorpus aus einem metallischen Material, vorzugsweise aus einem Edelstahlmaterial, insbesondere aus einem Chrom-Nickel-Stahl, gebildet.

Besonders geeignet ist das Verbindungsprofilelement zum Verbinden von Bauteilen, die jeweils aus einem metallischen Blechmaterial gebildet sind.

Das Verbindungsprofilelement ermöglicht eine vereinfachte Montage beim Zusammenfügen zweier Bauteile, die jeweils einen abgekanteten Bereich aufweisen.

Bei Verwendung des Verbindungsprofilelements entfallen aufwendige Vorarbeiten, und es ist keine Nachbearbeitung der miteinander verbundenen Bauteile erforderlich.

Die durch das Verbindungsprofilelement hergestellte Verbindung zwischen den miteinander zu verbindenden Bauteilen ist bei Bedarf, beispielsweise zur Wartung, Reinigung oder Reparatur, leicht lösbar.

Das Verbindungsprofilelement kann kostengünstig als Kunststoffteil hergestellt werden.

Ferner ermöglicht ein Verbindungsprofilelement, das zumindest teilweise aus einem thermisch isolierenden Material gebildet ist, eine thermische Trennung zwischen den miteinander zu verbindenden Bauteilen.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen horizontalen Querschnitt durch einen Speisentransportbehälter mit einem Außenkorpus und einem Innenkorpus, die durch ein Verbindungsprofilelement verbunden sind;
- Fig. 2: eine vergrößerte Darstellung des Bereichs I aus Fig. 1;
- Fig. 3: einen schematischen Querschnitt durch ein Außen-Teilprofilelement des Verbindungsprofilelements;
- Fig. 4: einen schematischen Querschnitt durch ein Innen-Teilprofilelement des Verbindungsprofilelements;
- Fig. 5: eine schematische perspektivische Darstellung des Verbindungs-profilelements mit daran aufgenommenen Bauteilen mit abgekanteten Bereichen und vollständig auf das Innen-Teilprofilelement aufgeschobenem Außen-Teilprofilelement;
- Fig. 6: eine der Fig. 5 entsprechende schematische perspektivische Darstellung, wobei das Außen-Teilprofilelement des Verbindungsprofilelements teilweise von dem Innen-Teilprofilelement abgezogen worden ist; und
- Fig. 7: einen schematischen Querschnitt durch eine zweite Ausführungsform eines Verbindungsprofilelements, welche einstückig ausgebildet ist.

Gleiche oder funktional äquivalente Elemente sind in allen Figuren mit denselben Bezugszeichen bezeichnet.

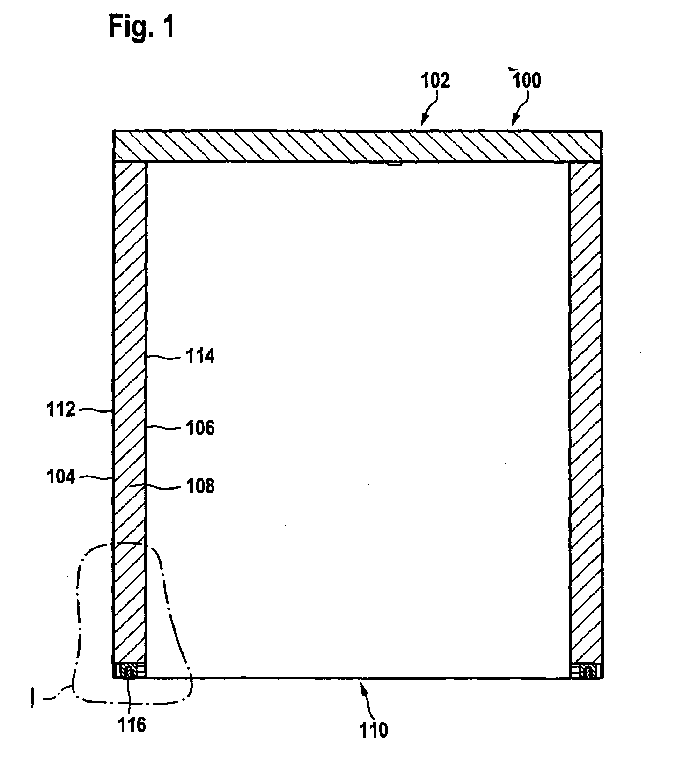

Ein in Fig. 1 im Querschnitt als Ganzes dargestellter Speisentransportbehälter 100, der insbesondere (mittels Laufrollen) fahrbar ausgebildet sein kann, umfasst ein Gehäuse 102, welches seinerseits einen eine Außenhaut des Gehäuses 102 bildenden Außenkorpus 104, einen eine Innenhaut des Gehäuses 102 bildenden Innenkorpus 106 sowie eine zwischen dem Außenkorpus 104 und dem Innenkorpus 106 angeordnete Wärmedämmschicht 108 aus einem thermisch isolierenden Kunststoffmaterial, beispielsweise aus Polyurethan, umfasst.

Der Außenkorpus 104 und der Innenkorpus 106 sind aus einem metallischen Material, insbesondere aus einem Edelstahlmaterial, beispielsweise aus einem Chrom-Nickel-Stahl, gebildet.

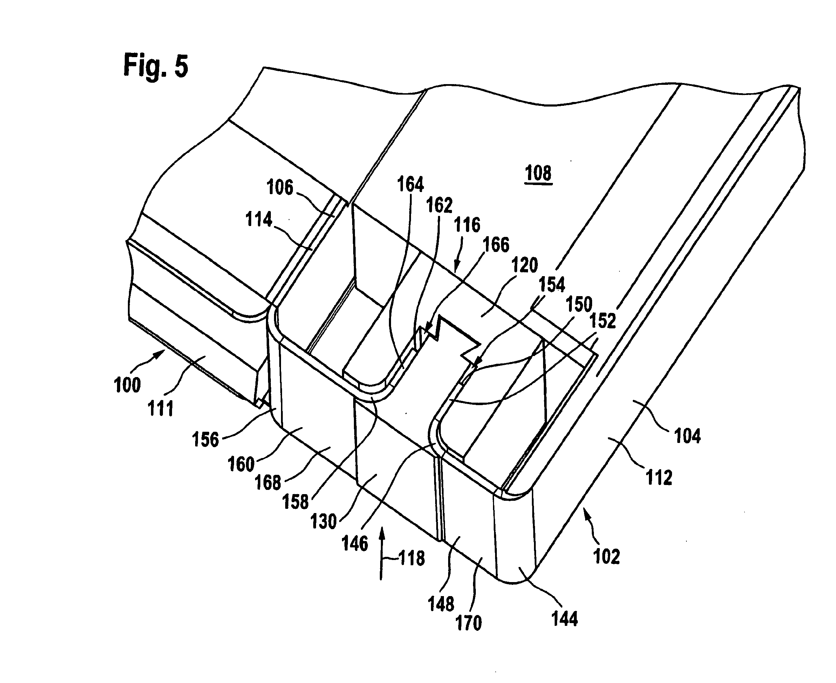

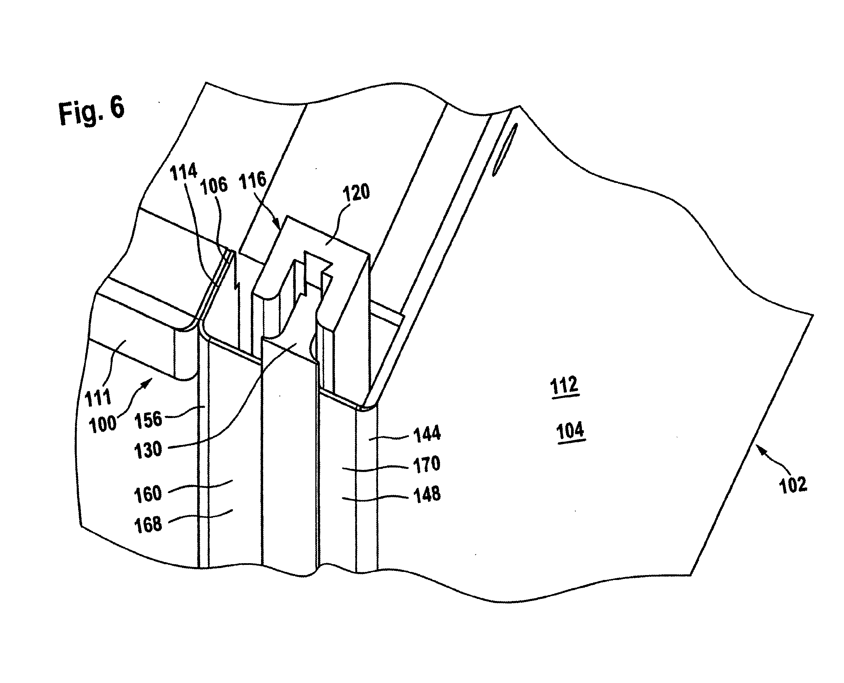

Im Bereich der stirnseitigen Zugangsöffnung 110 des Speisentransportbehälters 100, welche mittels einer (in den Fig. 5 und 6 dargestellten) an das Gehäuse 102 angelenkten Tür 111 verschließbar ist, sind jeweils eine Seitenwand 112 des Außenkorpus 104 und eine Seitenwand 114 des Innenkorpus 106 mittels eines Verbindungsprofilelements 116 miteinander verbunden.

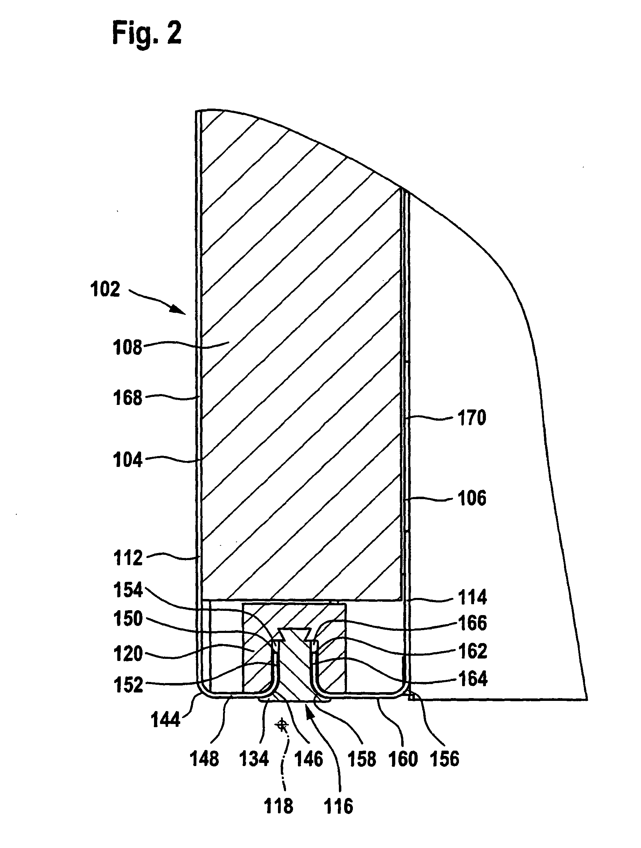

Das Verbindungsprofilelement 116 erstreckt sich in einer parallel zu einer Kante des Gehäuses 102 erstreckenden Längsrichtung 118 und weist in der Längsrichtung 118 einen im wesentlichen konstanten Querschnitt auf, welcher insbesondere aus Fig. 2 zu ersehen ist.

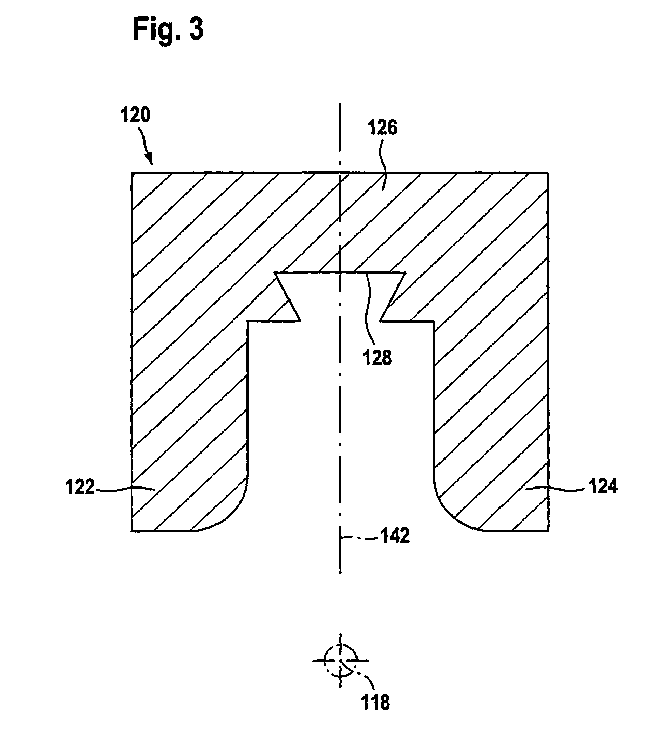

Das Verbindungsprofilelement 116 umfasst ein in Fig. 3 im Querschnitt dargestelltes Außen-Teilprofilelement 120, das einen im wesentlichen U-förmigen Querschnitt mit einem ersten Schenkel 122 und einem zweiten Schenkel 124 und einem beide Schenkel 122, 124 miteinander verbindenden Steg 126 aufweist, wobei der Steg 126 an seiner Innenseite mit einer im Querschnitt schwalbenschwanzförmigen Nut 128 versehen ist.

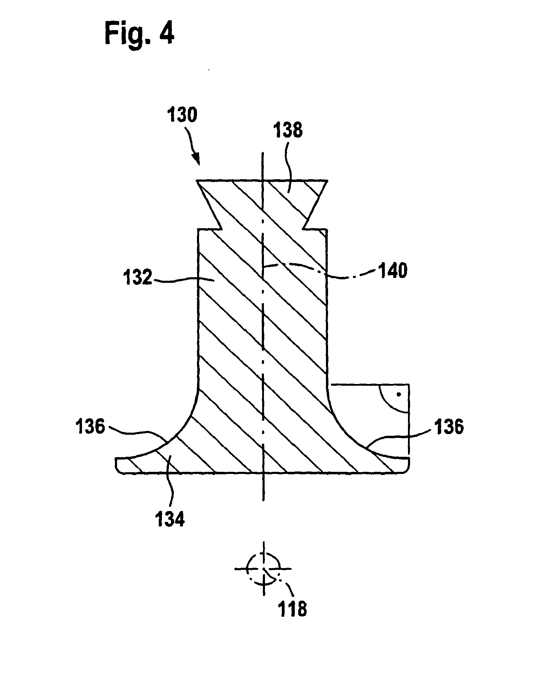

Ferner umfasst das Verbindungsprofilelement 116 ein im Querschnitt in Fig. 4 dargestelltes Innen-Teilprofilelement 130, das einen im wesentlichen T-förmigen Querschnitt aufweist, mit einem im Querschnitt im wesentlichen rechteckigen Trägerabschnitt 132 und einem an denselben anschließenden Querbalkenabschnitt 134, welcher zwei seitlich von dem Trägerabschnitt 132 abstehende bogenförmig gekrümmte Randabschnitte 136 aufweist, welche sich jeweils - im Querschnitt gesehen - über einen Bogenwinkel von 90° erstrecken.

An dem dem Querbalkenabschnitt 134 abgewandten Ende des Trägerabschnitts 132 ist der Trägerabschnitt 132 mit einem im Querschnitt schwalbenschwanzförmigen Vorsprung 138 versehen.

Sowohl das Innen-Teilprofilelement 130 als auch das Außen-Teilprofilelement 120 sind jeweils spiegelsymmetrisch zu ihren jeweiligen Längsmittelebenen 140 bzw. 142 und damit auch symmetrisch zur Längsmittelebene des Verbindungsprofilelements 116 ausgebildet.

Wie am besten aus den Fig. 2 und 5 zu ersehen ist, ist im montierten Zustand des Verbindungsprofilelements 116 das Innen-Teilprofilelement 130 so in das Außen-Teilprofilelement 120 eingesteckt, dass der Vorsprung 138 des Innen-Teilprofilelements 130 so in die Nut 128 des Außen-Teilprofilelements 120 eingreift, dass die beiden Teilprofilelemente 120, 130 in der Längsrichtung 118 des Verbindungsprofilelements 116 relativ zueinander verschieblich sind, während die beiden Teilprofilelemente 120, 130 durch Formschluss gegen eine Relativbewegung quer zur Längsrichtung 118 des Verbindungsprofilelements 116 gesichert sind.

Dabei verbleibt zwischen dem ersten Schenkel 122 des Außen-Teilprofilelements 120 und dem Innen-Teilprofilelement 130 ein Spalt mit einer im wesentlichen konstanten Spaltbreite d, die geringfügig größer ist als die Dicke des Metallblechs, aus welchem die Seitenwand 112 des Außenkorpus 104 gebildet ist.

Die Seitenwand 112 des Außenkorpus 104 ist an einer parallel zur Längsrichtung 118 des Verbindungsprofilelements 116 verlaufenden ersten Abkantlinie 144 (siehe Fig. 2) und an einer ebenfalls parallel zur Längsrichtung 118 des Verbindungsprofilelements 116 verlaufenden zweiten Abkantlinie 146 jeweils um einen Winkel von 90° abgekantet, so dass zwischen der ersten Abkantlinie 144 und der zweiten Abkantlinie 146 ein erster abgekanteter Bereich 148 und zwischen der zweiten Abkantlinie 146 und dem parallel zur Längsrichtung 118 des Verbindungsprofilelements 116 verlaufenden Rand 150 der Seitenwand 112 ein zweiter, zweifach abgekanteter Bereich 152 der Seitenwand 112 des Außenkorpus 104 ausgebildet ist.

Wie aus Fig. 2 zu ersehen ist, sind der zweite abgekantete Bereich 152 und der Bereich der zweiten Abkantlinie 146 in dem Spalt zwischen dem ersten Schenkel 122 des Außen-Teilprofilelements 120 und dem Innen-Teilprofilelement 130 aufgenommen, welcher somit eine erste Aufnahme 154 des Verbindungsprofilelements 116 bildet.

Die Seitenwand 114 des Innenkorpus 106 ist ebenfalls sowohl an einer parallel zur Längsrichtung 118 des Verbindungsprofilelements 116 verlaufenden ersten Abkantlinie 156 als auch an einer weiteren, parallel zur Längsrichtung 118 des Verbindungsprofilelements 116 verlaufenden zweiten Abkantlinie 158 um jeweils 90° abgekantet, so dass zwischen der ersten Abkantlinie 156 und der zweiten Abkantlinie 158 ein erster abgekanteter Bereich 160 und zwischen der zweiten Abkantlinie 158 und einem parallel zur Längsrichtung 118 des Verbindungsprofilelements 116 verlaufenden Rand 162 der Seitenwand 114 ein zweiter, zweifach abgekanteter Bereich 164 ausgebildet ist.

Der zweite abgekantete Bereich 164 und der Bereich der zweiten Abkantlinie 158 sind in dem Spalt zwischen dem zweiten Schenkel 124 des Außen-Teilprofilelements 120 und dem Innen-Teilprofilelement 130 aufgenommen, welcher somit eine zweite Aufnahme 166 des Verbindungsprofilelements 116 bildet und welcher ebenfalls eine Spaltbreite d aufweist, die geringfügig größer ist als die Dicke des Metallblechs, aus welchem die Seitenwand 114 des Innenkorpus 106 gebildet ist.

Im montierten Zustand des Verbindungsprofilelements 116 bildet der Querbalkenabschnitt 134 des Innen-Teilprofilelements 130 eine Hinterschneidung, welche ein Herausbewegen der zweiten abgekanteten Bereiche 152 und 164 der Seitenwände 112 bzw. 114 nach vorne aus der ersten Aufnahme 154 bzw. aus der zweiten Aufnahme 166 des Verbindungsprofilelements 116 heraus verhindert.

Der erste Schenkel 122 und der zweite Schenkel 124 des Außen-Teilprofilelements 120 bilden Hinterschneidungen, welche ein Auseinanderbewegen und ein Herausbewegen der zweiten abgekanteten Bereiche 152 und 164 in einer senkrecht zur Längsrichtung 118 des Verbindungsprofilelements 116 und senkrecht zu den zweiten abgekanteten Bereichen 152 und 164 gerichteten Richtung aus der ersten Aufnahme 154 bzw. aus der zweiten Aufnahme 166 heraus verhindern.

Die zweiten abgekanteten Bereiche 152 und 164 der Seitenwände 112 bzw. 114 könnten sich somit relativ zu dem Verbindungsprofilelement 116 nur in dessen Längsrichtung 118 bewegen; diese Bewegung längs der Längsrichtung 118 des Verbindungsprofilelements 116 aus der ersten Aufnahme 154 bzw. aus der zweiten Aufnahme 166 heraus wird jedoch im montierten Zustand des Gehäuses 102 durch die oberhalb der Seitenwände 112, 114 angeordnete Deckenwand und durch die unterhalb der Seitenwände 112, 114 angeordnete Bodenwand des Gehäuses 102 verhindert.

Im montierten Zustand des Gehäuses 102 bilden somit die Seitenwand 112 des Außenkorpus 104 und die Seitenwand 114 des Innenkorpus 106 ein erstes Bauteil 168 bzw. ein zweites Bauteil 170, welche durch das Verbindungsprofilelement 116 so miteinander verbunden sind, dass sie nicht auseinanderbewegt werden können.

Das Innen-Teilprofilelement 130 ist dabei aus einem thermisch isolierenden Kunststoff gebildet, so dass die durch das Verbindungsprofilelement 116 miteinander verbundenen Bauteile 168, 170 thermisch voneinander isoliert sind.

Auf diese Weise kann bei Kühlbetrieb des Speisentransportbehälters 100 keine Wärme vom Außenkorpus 104 über das Verbindungsprofilelement 116 zu dem Innenkorpus 106 gelangen.

Im Falle eines Heizbetriebs des Speisentransportbehälters 100 kann keine Wärme vom Innenkorpus 106 über das Verbindungsprofilelement 116 zum Außenkorpus 104 gelangen.

Für Wartungs-, Reinigungs- oder Reparaturzwecke kann die Verbindung zwischen dem ersten Bauteil 168 und dem zweiten Bauteil 170 leicht gelöst werden, indem das Verbindungsprofilelement 116 als Ganzes oder aber auch nur das Außen-Teilprofilelement 120 längs der Längsrichtung 118 von den miteinander verbundenen Bauteilen 168, 170 abgezogen wird, wie dies in Fig. 6 dargestellt ist.

Zur Montage des Gehäuses 102 werden die miteinander zu verbindenden Bauteile 168 und 170 in ihre gewünschte Relativposition gebracht und anschließend das Verbindungsprofilelement 116 so auf die Bauteile 168, 170 aufgeschoben, dass die zweiten abgekanteten Bereiche 152, 164 in die erste Aufnahme 154 bzw. in die zweite Aufnahme 166 des Verbindungsprofilelements 116 gelangen, wie dies in Fig. 5 dargestellt ist.

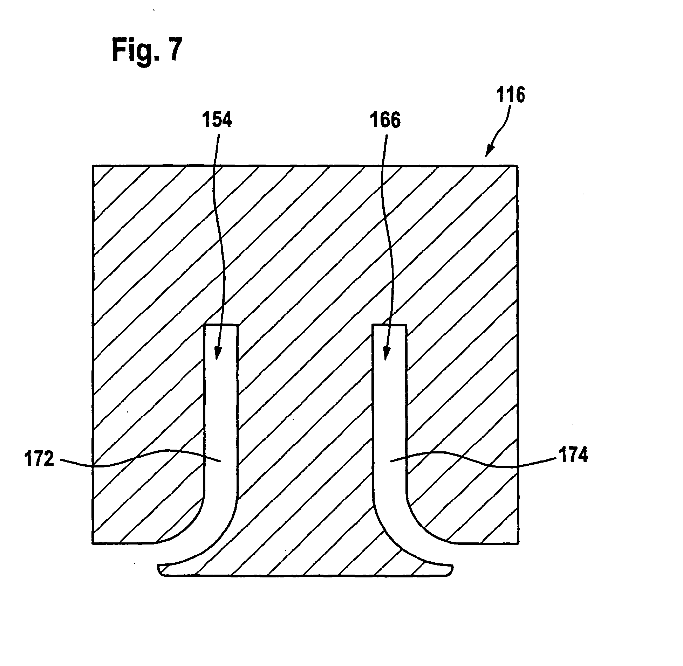

Eine in Fig. 7 dargestellte zweite Ausführungsform eines Verbindungsprofilelements 116 unterscheidet sich von der in den Fig. 1 bis 6 dargestellten ersten Ausführungsform lediglich dadurch, dass das Außen-Teilprofilelement und das Innen-Teilprofilelement bei dieser Ausführungsform einstückig miteinander verbunden sind, so dass das Verbindungsprofilelement 116 insgesamt einstückig ausgebildet ist.

Die erste Aufnahme 154 zum Aufnehmen des zweiten abgekanteten Bereichs 152 der Seitenwand 112 des Außenkorpus 104 und die zweite Aufnahme 166 zum Aufnehmen des zweiten abgekanteten Bereichs 164 der Seitenwand 114 des Innenkorpus 106 sind in diesem Fall durch zwei, abschnittsweise bogenförmig gekrümmte Nuten 172 bzw. 174 in dem Verbindungsprofilelement 116 gebildet.

Bei dieser Ausführungsform ist vorzugsweise das ganze Verbindungsprofilelement 116 aus einem thermisch isolierenden Kunststoff hergestellt.

Im übrigen stimmt die in Fig. 7 dargestellte zweite Ausführungsform eines Verbindungsprofilelements 116 hinsichtlich Aufbau und Funktion mit der in den Fig. 1 bis 6 dargestellten ersten Ausführungsform überein, auf deren vorstehende Beschreibung insoweit Bezug genommen wird.

## Patentansprüche

1. Speisentransportbehälter, umfassend
einen Außenkorpus (104), der mindestens ein Bauteil (168) mit mindestens einem abgekanteten Bereich (152) umfasst,
einen Innenkorpus (106), der mindestens ein Bauteil (170) mit mindestens einem abgekanteten Bereich (164) umfasst, und
mindestens ein Verbindungsprofilelement (116), durch welches das mindestens eine Bauteil (168) des Außenkorpus (104) mit dem mindestens einen Bauteil (170) des Innenkorpus (106) verbunden ist,
wobei das Verbindungsprofilelement (116) mindestens zwei Aufnahmen (154, 166) für jeweils einen abgekanteten Bereich (152, 164) eines der miteinander verbundenen Bauteile (168, 170) umfasst.

2. Speisentransportbehälter nach Anspruch 1, **dadurch gekennzeichnet, dass** sich die Aufnahmen (154, 166) für die abgekanteten Bereiche (152, 164) in einer Längsrichtung (118) des Verbindungsprofilelements (116) erstrecken.

3. Speisentransportbehälter nach einem der Ansprüche 1 oder 2, **dadurch gekennzeichnet, dass** mindestens eine der Aufnahmen (154, 166) für die abgekanteten Bereiche (152, 164) im Querschnitt gesehen mindestens einen bogenförmig gekrümmten Abschnitt aufweist.

4. Speisentransportbehälter nach Anspruch 3, **dadurch gekennzeichnet, dass** der mindestens eine bogenförmig gekrümmte Abschnitt sich über einen Bogenwinkel von mindestens 45°, vorzugsweise von mindestens 60°, erstreckt.

5. Speisentransportbehälter nach einem der Ansprüche 1 bis 4, **dadurch gekennzeichnet, dass** die mindestens zwei Aufnahmen (154, 166) spiegelsymmetrisch zueinander angeordnet sind.

6. Speisentransportbehälter nach einem der Ansprüche 1 bis 5, **dadurch gekennzeichnet, dass** das Verbindungsprofilelement (116) zumindest teilweise aus einem thermisch isolierenden Material gebildet ist.

7. Speisentransportbehälter nach einem der Ansprüche 1 bis 6, **dadurch gekennzeichnet, dass** das Verbindungsprofilelement (116) zumindest teilweise aus einem Kunststoffmaterial gebildet ist.

8. Speisentransportbehälter nach einem der Ansprüche 1 bis 7, **dadurch gekennzeichnet, dass** das Verbindungsprofilelement (116) einstückig ausgebildet ist.

9. Speisentransportbehälter nach einem der Ansprüche 1 bis 7, **dadurch gekennzeichnet, dass** das Verbindungsprofilelement (116) mindestens zwei relativ zueinander verschiebbare Teilprofilelemente (120, 130) umfasst.

10. Speisentransportbehälter nach Anspruch 9, **dadurch gekennzeichnet, dass** die mindestens zwei Teilprofilelemente (120, 130) durch eine Nut-Feder-Verbindung miteinander verbunden sind.

11. Speisentransportbehälter nach Anspruch 10, **dadurch gekennzeichnet, dass** die Feder des einen Teilprofilelements (130) und/oder die Nut des anderen Teilprofilelements (120) im wesentlichen schwalbenschwanzförmig ausgebildet sind.

12. Speisentransportbehälter nach einem der Ansprüche 1 bis 11, **dadurch gekennzeichnet, dass** mindestens eines der Bauteile (168, 170) aus einem metallischen Material, vorzugsweise aus einem Edelstahlmaterial, insbesondere aus einem Chrom-Nickel-Stahl, gebildet ist.

## Claims

1. Food transport container, comprising
an outer body (104), which comprises at least one structural part (168) with at least one bent region (152),
an inner body (106), which comprises at least one structural part (170) with at least one bent region (164), and
at least one connection profile element (116), by means of which the at least one structural part (168) of the outer body (104) is connected to the at least one structural part (170) of the inner body (106),
wherein the connection profile element (116) comprises at least two receiving means (154, 166) for a respective bent region (152, 164) of one of the structural parts (168, 170) connected to one another.

2. Food transport container according to claim 1, **characterised in that** the receiving means (154, 166) for the bent regions (152, 164) extend in a longitudinal direction (118) of the connection profile element (116).

3. Food transport container according to one of claims 1 or 2, **characterised in that** at least one of the receiving means (154, 166) for the bent regions (152, 164) has at least one section curved in an arc shape viewed in cross-section.

4. Food transport container according to claim 3, **characterised in that** the at least one section curved in an arc shape extends over an arc angle of at least 45°, preferably of at least 60°.

5. Food transport container according to one of claims 1 to 4, **characterised in that** the at least two receiving means (154, 166) are arranged mirrorsymmetrically to one another.

6. Food transport container according to one of claims 1 to 5, **characterised in that** the connection profile element (116) is formed at least partially from a thermally insulating material.

7. Food transport container according to one of claims 1 to 6, **characterised in that** the connection profile element (116) is formed at least partially from a plastics material.

8. Food transport container according to one of claims 1 to 7, **characterised in that** the connection profile element (116) is configured in one piece.

9. Food transport container according to one of claims 1 to 7, **characterised in that** the connection profile element (116) comprises at least two component profile elements (120, 130), which are displaceable relative to one another.

10. Food transport container according to claim 9, **characterised in that** the at least two component profile elements (120, 130) are connected to one another by a tongue and groove connection.

11. Food transport container according to claim 10, **characterised in that** the tongue of one component profile element (130) and/or the groove of the other component profile element (120) are substantially dovetailed in configuration.

12. Food transport container according to one of claims 1 to 11, **characterised in that** at least one of the structural parts (168, 170) is formed from a metal material, preferably from a special steel material, in particular a nickel chromium steel.

## Revendications

1. Conteneur pour le transport d'aliments, comprenant
un corps extérieur (104) qui comprend au moins un élément de construction (168) avec au moins une zone chanfreinée (152),
un corps intérieur (106), qui comprend au moins un élément de construction (170) avec au moins une zone chanfreinée (164), et
au moins un élément profilé de liaison (116) par lequel au moins un élément de construction (168) du corps extérieur (104) est relié avec au moins un élément de construction (170) du corps intérieur (106),
l'élément profilé de liaison (116) comprenant au moins deux logements (154, 166) pour une zone chanfreinée (152, 164) d'un des éléments de construction (168, 170) reliés mutuellement.

2. Conteneur pour le transport d'aliments suivant la revendication 1, **caractérisé en ce que** les logements (154, 166) pour les zones chanfreinées (152, 164) s'étendent dans une direction longitudinale (118) de l'élément profilé de liaison (116).

3. Conteneur pour le transport d'aliments suivant l'une des revendications 1 ou 2, **caractérisé en ce que** au moins l'un des logements (154, 166) présente, pour les zones chanfreinées (152, 164), vues en coupe transversale, au moins une section incurvée en forme d'arc.

4. Conteneur pour le transport d'aliments suivant la revendication 3, **caractérisé en ce que** au moins une section incurvée en forme d'arc s'étend sur un angle d'arc d'au moins 45°, de préférence d'au moins 60°.

5. Conteneur pour le transport d'aliments suivant l'une des revendications 1 à 4, **caractérisé en ce que** au moins deux logements (154, 166) sont disposés à symétrie parfaite l'un par rapport à l'autre.

6. Conteneur pour le transport d'aliments suivant l'une des revendications 1 à 5, **caractérisé en ce que** l'élément profilé de liaison (116) est au moins formé partiellement à partir d'un matériau isolé thermiquement.

7. Conteneur pour le transport d'aliments suivant l'une des revendications 1 à 6, **caractérisé en ce que** l'élément profilé de liaison (116) est au moins constitué partiellement d'un matériau plastique.

8. Conteneur pour le transport d'aliments suivant l'une des revendications 1 à 7, **caractérisé en ce que** l'élément profilé de liaison (116) est formé d'une seule pièce.

9. Conteneur pour le transport d'aliments suivant l'une des revendications 1 à 7, **caractérisé en ce que** l'élément profilé de liaison (116) comprend au moins deux éléments profilés partiellement, déplaçables l'un relativement à l'autre (120, 130).

10. Conteneur pour le transport d'aliments suivant la revendication 9, **caractérisé en ce que** les au moins deux éléments profilés partiellement (120, 130) sont reliés mutuellement par un assemblage à rainure et languette.

11. Conteneur pour le transport d'aliments suivant la revendication 10, **caractérisé en ce que** la languette d'un élément profilé partiellement (130) et/ou la rainure de l'autre élément profilé partiellement (150) sont formés, pour l'essentiel, en queue d'aronde.

12. Conteneur pour le transport d'aliments suivant l'une des revendications 1 à 11, **caractérisé en ce que** au moins l'un des éléments de construction (168, 170) est constitué d'une matière métallique, préférentiellement d'une matière en acier inox, en particulier d'un acier au chrome-nickel.
